# EUROPÄISCHE PATENTSCHRIFT

(11) **EP 3 106 296 B1**
(45) Veröffentlichungstag und Bekanntmachung des Hinweises auf die Patenterteilung: **01.01.2020**
(21) Anmeldenummer: 15172361.6
(22) Anmeldetag: 16.06.2015
(51) Int. Cl.: B32B 5/00, B32B 25/08, B32B 25/10, B32B 27/08, B32B 27/30, B32B 1/08, E03C 1/02, F16L 11/08

(54) **SCHLAUCH MIT EINER TEXTILLAGE**
HOSE HAVING A TEXTILE LAYER
TUYAU AVEC UNE COUCHE DE TEXTILE

(43) Veröffentlichungstag der Anmeldung: 21.12.2016
(73) Patentinhaber: Ramspott GmbH & Co. KG, 59909 Bestwig (DE)
(72) Erfinder: Ramspott, Heiner, 59909 Bestwig (DE)
(74) Vertreter: Manske, Jörg

(56) Entgegenhaltungen:
- WO-A1-2014/053884
- DE-U1-202013 104 202
- DATABASE WPI Week 200878 Thomson Scientific, London, GB; AN 2008-N37147 XP002751046, & JP 2008 248943 A (TOYODA GOSEI KK) 16. Oktober 2008 (2008-10-16)

## Beschreibung

Die vorliegende Erfindung betrifft einen Schlauch, insbesondere einen Brauseschlauch
- mit einer Innenschicht,
- mit einer Textillage,
- mit einer Zwischenschicht und
- mit einer Außenschicht.

Textillagen, häufig in der Form eines Geflechtes oder eines Gewebes oder in der Form von Längsfäden, werden bei Schläuchen häufig zur Erhöhung der Zugfestigkeit des Schlauches in seine Längsrichtung und/oder zur Erhöhung der Druckfestigkeit gegen den Druck eines in dem Schlauch geführten Mediums benutzt. Die Textillagen führen zu einer höheren Zug- und/oder Druckfestigkeit, die über der Zug- und/oder Druckfestigkeit liegt, die durch die Innenschicht, die Zwischenschicht und die Außenschicht erzielt wird.

Ein Nachteil von derartigen Schläuchen ist, dass sich die Textillage auf der äußeren Oberfläche, das heißt der Oberfläche der Außenschicht abzeichnet. Das mag in vielen Anwendungsfällen erwünscht oder hinnehmbar sein, in einigen Fällen, insbesondere in Fällen, in denen ein bestimmtes Erscheinungsbild eines Schlauches gewünscht wird, ist das Abzeichnen der Textillage auf der Oberfläche des Schlauches nicht hinnehmbar oder nicht erwünscht.

Das Dokument WO 2014/053884 A1 offenbart einen Schlauch, der eine Textillage hat, die aus Schnüren hergestellt ist, die einen Kern mit einer längenbezogenen Masse mit mindestens 400 dtex aufweist, der mit Fäden mit einer längenbezogenen Masse von 40 bis 400 dtex ummantelt ist. Die Textillage, die aus der aus dem Kern und den Ummantelungsfäden zusammengesetzten Schnur gebildet ist, hat eine Stärke, die dazu führt, dass sich die Textillage auf der äußeren Oberfläche abzeichnet. Weitere Schläuche mit Textillagen sind in den Dokumenten XP-002751046 und DE 20 2013 104 202 U1 offenbart.

Üblicherweise wurden Schläuche aus PVC gefertigt. Da PVC in Schläuchen, mit denen Trinkwasser geleitet wird, nicht mehr so verwendet werden soll, dass das PVC mit dem Trinkwasser in Kontakt kommt, muss für diesen Einsatzzweck nach Alternativen gesucht werden.

Hier setzt die Erfindung an.

Der Erfindung lag das Problem zugrunde, einen Schlauch vorzuschlagen, der eine hinreichende Festigkeit hat und der zugleich ohne PVC-Innenschicht oder mit einer PVC-Zwischenschicht mit reduzierter Schichtdicke auskommt.

Dieses Problem wird erfindungsgemäß dadurch gelöst, dass die Textillage Fäden mit einer längenbezogenen Masse von maximal 300 dtex z.B. 280 dtex aufweist.

Die Fäden einer solchen Textillage sind so dünn, dass sie von außen nicht sichtbar sind. Damit kann ein Schlauch geschaffen werden, der durch eine Textillage verstärkt ist, ohne dass die Einlage von außen sichtbar ist. Die geringe längenbezogene Masse ist dabei deutlich unter der längenbezogenen Masse der Fäden, die bei bekannten Schläuchen bei ca. 550 dtex liegt. Die längenbezogene Masse der Fäden, die für Textillagen von erfindungsgemäßen Fäden verwendet werden, ist somit rund halb so groß wie die längenbezogene Masse der Fäden herkömmlicher Schläuche. Die Fäden sind damit dünner und zeichnen sich nicht auf der äußeren Oberfläche der Zwischenschicht und/oder der Außenschicht ab.

Durch ein Erhitzen der Innenschicht vor dem Aufbringen der Fäden kann bei der Herstellung des Schlauches dafür gesorgt werden, dass die Fäden sich in die Oberfläche der Zwischenschicht eindrücken, was einem Abzeichnen der Fäden auf der äußeren Oberfläche der Außenschicht entgegenwirkt.

Durch die Verwendung dünnerer Fäden als bisher und zusätzlich auch durch die Verwendung von Fäden, die sich leicht zusammendrücken lassen, kann ein besserer Kontakt der Innenschicht mit der Zwischenschicht erreicht werden, was die Verbindung zwischen diesen Schichten verbessert.

Bei einem erfindungsgemäßen Schlauch können Fäden verwendet werden, die eine Drehung von 130 Drehungen pro Meter aufweisen.

Bei einem erfindungsgemäßen Schlauch kann
- die Innenschicht ein thermoplastisches Elastomer, TPSiV oder PVC und/oder
- die Zwischenschicht ein thermoplastisches Elastomer oder PVC und/oder
- die Außenschicht PVC
enthalten oder aus diesen Stoffen bestehen.

Ein erfindungsgemäßer Schlauch kann auch mehr als eine Zwischenschicht aufweisen. Weitere Zwischenschichten können ebenfalls aus einem thermoplastischen Elastomer oder aus PVC bestehen.

Die Textillage eines erfindungsgemäßen Schlauches kann ausschließlich Fäden mit einer längenbezogenen Masse von maximal 130, insbesondere maximal 74 dtex aufweisen. Zwar haben Fäden mit einer längenbezogenen Masse von unter 150 dtex den Nachteil, dass sie sich mitunter schwerer verarbeiten lassen, dafür führen sie in einem erfindungsgemäßen Schlauch zu einer ausreichenden Festigkeit des Schlauches. Insbesondere Fäden mit einer längenbezogenen Masse von 74 dtex führen zu einer ausreichenden Festigkeit. Ein Vorteil der Fäden mit einer kleinen längenbezogenen Masse ist, dass diese sich nicht nach dem überziehen mit einer einzigen Zwischenschicht auf der äußeren Oberfläche der Zwischenschicht abzeichnen. Wenn die Zwischenschicht eingefärbt ist oder die äußere Oberfläche der Zwischenschicht lackiert ist, eine Pulverschicht trägt oder mit einer Heißprägefolie versehen ist, kann die Zwischenschicht mit einer transparenten Außenschicht versehen werden, ohne dass die Textillage von außen zu erkennen ist.

Die Fäden der Textillage eines erfindungsgemäßen Schlauches können in sich gedreht sein. Die Anzahl der Drehungen kann 130 pro Meter betragen. Eine geringe Drehung (Zwirnung) des Fadens hat den Vorteil, dass der Faden sich besser zusammendrücken lässt, wodurch er flacher wird. Auch dadurch kann einem Abzeichnen der Fäden bzw. der Textillage in der äußeren Oberfläche der Zwischenschicht oder der äußeren Oberfläche der Außenschicht entgegen gewirkt werden.

Jeder der Fäden einer Textillage kann als Wendel um den Innenschlauch gelegt sein. Durch einen Wendel wird gegenüber längs des Schlauches verlaufender Fäden auch die Druckfestigkeit und nicht nur die Zugfestigkeit verbessert. Wenigstens ein Faden kann rechtsgängig gewendelt und wenigstens ein Faden kann linksgängig gewendelt sein. Durch Wendel in beide Richtungen wird der Neigung eines Schlauches entgegen gewirkt, sich z.B. bei Druckbelastung abhängig von der Richtung der Wendel zu verformen.

Es hat sich gezeigt, dass es von Vorteil ist, mehrere Wendel vorzusehen. So können zum Beispiel bei einem erfindungsgemäßen Schlauch sechs bis 18 Fäden rechtsgängig und sechs bis 18 Fäden linksgängig gewendelt sein.

Der Abstand von zwei rechtsgängigen oder zwei linksgängigen Fäden, in einer Längsrichtung des Schlauches gemessen, kann ca. 1 bis 2 mm betrage.

Das bei einem Schlauch verwendete thermoplastische Elastomer kann ein TPO sein. Ebenso kann ein Syntheseprodukt aus einem Silikonkautschuk und einem technischen Thermoplast verwendet werden. Letzteres wird u.a. unter der Bezeichnung TPSiV vertrieben. Die Zwischenschicht kann eingefärbt sein, insbesondere durch den Zusatz von Farbpigmenten, chromfarbenen Aluminiumpartikeln oder aluminiumbedampften Polyesterpartikeln oder den Zusatz von farbigem Kunststoffgranulat zu einem Basisgranulat, welches für eine Extrusion der Zwischenschicht verwendet wird. Die Zwischenschicht kann alternativ lackiert sein oder mit einer Pulverschicht oder mit einer Heißprägefolie überzogen sein.

Die Stärke der Innenschicht eines erfindungsgemäßen Schlauches kann 40 bis 60 %, der Zwischenschicht 20 bis 30 % und der Außenschicht 10 bis 30 % der Wandstärke des gesamten Schlauches betragen.

Der Faden oder die Fäden der Textillage können aus einem Polyesterfaserstoff, zum Beispiel aus PET bestehen.

Der Faden oder die Fäden können aus 24 bis 48 Filamenten (Fasern) mit ca. 2 bis 8 dtex, insbesondere 3 bis 5,7 dtex bestehen.

Die Außenschicht kann transparent sein.

Gemäß der Erfindung kann der Zwischenschicht ein Additiv beigefügt sein, welches die Haftung zwischen der Innenschicht und der Zwischenschicht verbessert. Das Additiv kann durch Farbpigmente in der Zwischenschicht gebildet sein. Das Additiv kann eine bessere Verbindung dadurch bewirken, dass Partikel des Additivs sich in den Oberflächen beider Schichten verhaken. Vorteilhaft ist es, wenn die Haftung der Außenschicht an der Zwischenschicht besser ist als die Haftung der Zwischenschicht an der Innenschicht. Dann kann sich bei einem starken Knicken des Schlauches ggf. die Zwischenschicht von der Innenschicht lösen, während die Außenschicht an der Zwischenschicht haften bleibt, so dass der optische Eindruck des Schlauches erhalten bleibt. Das ist von besonderer Bedeutung wenn die Außenschicht transparent ist.

Ein Beispiel für einen erfindungsgemäßen Schlauch ist in der Zeichnung dargestellt.

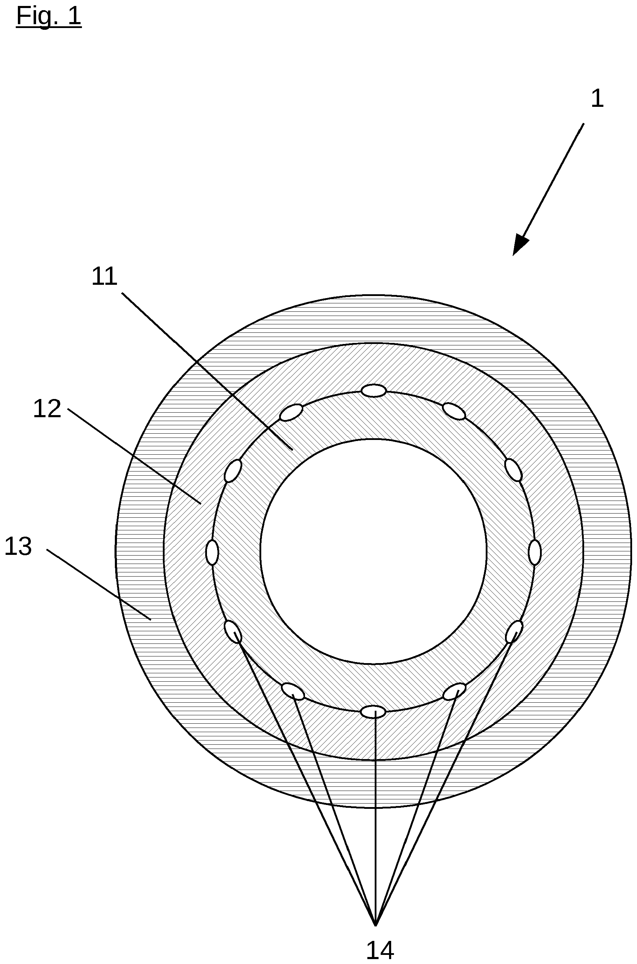

- Fig. 1: zeigt einen Querschnitt durch einen erfindungsgemäßen Schlauch.

Der beispielhafte erfindungsgemäße Schlauch 1 hat drei Schichten 11, 12, 13 und eine Textillage 14. Die Innenschicht 11 des Schlauches 1 ist aus TPSiV hergestellt.

Diese Innenschicht wird unmittelbar nach der Extrusion der Innenschicht mit zwölf Fäden wendelförmig umwickelt. Es könnten stattdessen auch 18 Fäden verwendet werden.Dabei sind sechs bzw. neun Fäden linksgängig und sechs bzw. neun Fäden rechtsgängig. Die Fäden können miteinander verflochten sein. Die Fäden haben eine längenbezogene Masse von vorteilhaft 74 bis 130 dtex. Die Fäden sind vorzugsweise aus mit ca. 130 Drehungen pro Meter gedrehten Filamenten mit ca. 3 bis 6 dtex pro Filament hergestellt. Die gewendelten Fäden haben zu einem benachbarten Faden mit gleichem Wicklungssinn einen Abstand von ca. 1 bis 2 mm. Die Fäden sind vorzugsweise aus Polyester, insbesondere PET hergestellt.

Die sich nach außen an die Textillage 14 anschließende Zwischenschicht 12 ist aus PVC hergestellt. Für die Extrusion der Zwischenlage wird als Grundstoff ein transparentes PVC-Granulat verwendet, dem ein silbergraues, chromfarbenes oder silberfarbenes, vorzugsweise durch Pigmente eingefärbtes PVC-Granulat beigemischt ist. Dadurch erhält die Zwischenschicht 12 eine silbergraue Farbe. In der äußeren Oberfläche zeichnen sich die Fäden der Textillage nicht ab.

In einem weiteren Extrusionsschritt wird dann eine transparente PVC-Außenschicht 13 aufgetragen, die dem Schlauch 1 einen brillianten Glanz geben kann und die gefärbte Zwischenschicht 12 schützt.

Von der Wandstärke des Schlauches beträgt die Stärke der Innenschicht 11 ca. 45 bis 55%, die Stärke der Zwischenschicht 20 bis 25% und die Stärke der Außenschicht ca. 20 bis 30%. Die Wandstärke kann zwischen 6 mm und 7 mm liegen. Der Außendurchmesser des Schlauches kann zwischen 13,5 und 15 mm liegen.

## Patentansprüche

1. Schlauch (1), insbesondere Sanitärschlauch, z.B. Brauseschlauch
- mit einer Innenschicht (11),
- mit einer Textillage (14),
- mit einer Zwischenschicht (12) und
- mit einer Außenschicht (13),
- **dadurch gekennzeichnet, dass** die Textillage (14) Fäden mit einer längenbezogenen Masse von maximal 300 dtex aufweist.

2. Schlauch nach Anspruch 1, **dadurch gekennzeichnet, dass**
- die Innenschicht (11) ein thermoplastisches Elastomer, TPSiV oder PVC und/oder
- die Zwischenschicht (12) ein thermoplastisches Elastomer, TPSiV oder PVC und/oder
- die Außenschicht (13) PVC
enthält oder aus diesen Stoffen besteht.

3. Schlauch nach Anspruch 1 oder 2, **dadurch gekennzeichnet, dass** die Textillage (14) ausschließlich Fäden mit einer längenbezogenen Masse von maximal 140 dtex, insbesondere von maximal 80 dtex aufweist.

4. Schlauch nach einem der Ansprüche 1 bis 3, **dadurch gekennzeichnet, dass** jeder der Fäden als Wendel um den Innenschlauch (11) gelegt ist.

5. Schlauch nach Anspruch 4, **dadurch gekennzeichnet, dass** wenigstens ein Faden rechtsgängig gewendelt und wenigstens ein Faden linksgängig gewendelt ist.

6. Schlauch nach Anspruch 6, **dadurch gekennzeichnet, dass** sechs bis 18 Fäden rechtsgängig und sechs bis 18 Fäden linksgängig gewendelt sind.

7. Schlauch nach Anspruch 6, **dadurch gekennzeichnet, dass** der Abstand von zwei rechtsgängigen oder zwei linksgängigen Fäden, in einer Längsrichtung des Schlauches (1) gemessen, ca. 1 bis 2 mm beträgt.

8. Schlauch nach einem der Ansprüche 1 bis 7, **dadurch gekennzeichnet, dass** das thermoplastische Elastomer ein TPO oder ein Syntheseprodukt aus einem Silikonkautschuk und einem technischen Thermoplast, insbesondere ein TPSiV ist.

9. Schlauch nach einem der Ansprüche 1 bis 8, **dadurch gekennzeichnet, dass** die Zwischenschicht eingefärbt, insbesondere mit Farbpigmenten, oder lackiert ist oder mit einer Pulverschicht oder mit einer Heißprägefolie überzogen ist.

10. Schlauch nach einem der Ansprüche 1 bis 9, **dadurch gekennzeichnet, dass** die Innenschicht 40 bis 60 %, die Zwischenschicht 20 bis 30 % und die Außenschicht 10 bis 30 % der Wandstärke des Schlauches(1) beträgt.

11. Schlauch nach einem der Ansprüche 1 bis 10, **dadurch gekennzeichnet, dass** der Faden oder die Fäden der Textillage (14) aus einem Polyesterfaserstoff, zum Beispiel PET, bestehen.

12. Schlauch nach einem der Ansprüche 1 bis 11, **dadurch gekennzeichnet, dass** der Faden oder die Fäden aus 24 bis 48 Filamenten mit 3 bis 5,7 dtex bestehen.

13. Schlauch nach einem der Ansprüche 1 bis 12, **dadurch gekennzeichnet, dass** der Zwischenschicht (12) ein Additiv beigefügt ist, welches die Haftung der Zwischenschicht (13) an der Innenschicht (12) verbessert.

14. Schlauch nach einem der Ansprüche 1 bis 13, **dadurch gekennzeichnet, dass** die Zwischenschicht und die Innenschicht verklebt sind, z.B. mittels einer Klebstoffschicht.

15. Schlauch nach einem der Ansprüche 1 bis 14, **dadurch gekennzeichnet, dass** die Haftung der Außenschicht (13) an der Zwischenschicht (12) besser ist als die Haftung der Zwischenschicht (12) an der Innenschicht (11).

## Claims

1. Hose (1), in particular sanitation hose, for example shower hose
- having an inner layer (11),
- having a textile layer (14),
- having an intermediate layer (12) and
- having an outer layer (13),
- **characterised in that** the textile layer (14) has threads having a linear density of a maximum of 300 dtex.

2. Hose according to claim 1, **characterised in that**
- the inner layer (11) contains a thermoplastic elastomer, TPSiV or PVC or consists of these materials and/or
- the intermediate layer (12) contains a thermoplastic elastomer, TPSiV or PVC or consists of these materials and/or
- the outer layer (13) contains PVC or consists of this material.

3. Hose according to claim 1 or 2, **characterised in that** the textile layer (14) has exclusively threads having a linear density of a maximum of 140 dtex, in particular of a maximum of 80 dtex.

4. Hose according to any one of claims 1 to 3, **characterised in that** each of the threads is laid as a helix around the inner hose (11).

5. Hose according to claim 4, **characterised in that** at least one thread is helical in a clockwise manner and at least one thread is helical in an anticlockwise manner.

6. Hose according to claim 6, **characterised in that** six to 18 threads are helical in a clockwise manner and six to 18 threads are helical in an anticlockwise manner.

7. Hose according to claim 6, **characterised in that** the spacing of two clockwise or two anticlockwise threads, measured in a longitudinal direction of the hose (1), amounts to approx. 1 to 2mm.

8. Hose according to any one of claims 1 to 7, **characterised in that** the thermoplastic elastomer is a TPO or a synthetic product made from a silicon rubber and a technical thermoplastic, in particular a TPSiV.

9. Hose according to any one of claims 1 to 8, **characterised in that** the intermediate layer is coloured, in particular with coloured pigments, or is painted or is covered with a powder layer or with a hot-embossing film.

10. Hose according to any one of claims 1 to 9, **characterised in that** the inner layer amounts to 40 to 60%, the intermediate layer to 20 to 30% and the outer layer to 10 to 30% of the wall thickness of the hose (1).

11. Hose according to any one of claims 1 to 10, **characterised in that** the thread or the threads of the textile layer (14) consist of a polyester fibre material, for example PET.

12. Hose according to any one of claims 1 to 11, **characterised in that** the thread or the threads consist of 24 to 48 filaments having 3 to 5.7 dtex.

13. Hose according to any one of claims 1 to 12, **characterised in that** an additive is attached to the intermediate layer (12) which improves the adhesion of the intermediate layer (13) to the inner layer (12).

14. Hose according to any one of claims 1 to 13, **characterised in that** the intermediate layer and the inner layer are stuck together, for example by means of a glue layer.

15. Hose according to any one of claims 1 to 14, **characterised in that** the adhesion of the outer layer (13) to the intermediate layer (12) is better than the adhesion of the intermediate layer (12) to the inner layer (11).

## Revendications

1. Tuyau (1), en particulier tuyau sanitaire, par ex. tuyau de douche
- avec une couche intérieure (11),
- avec une couche textile (14),
- avec une couche intermédiaire (12) et
- avec une couche extérieure (13),
- **caractérisé en ce que** la couche textile (14) présente des fils avec une masse par unité de longueur de maximum 300 dtex.

2. Tuyau selon la revendication 1, **caractérisé en ce que**
- la couche intérieure (11) contient un élastomère thermoplastique, TPSiV ou PVC et/ou
- la couche intermédiaire (12) contient un élastomère thermoplastique, TPSiV ou PVC et/ou
- la couche extérieure (13) contient du PVC
ou se compose de ces substances.

3. Tuyau selon la revendication 1 ou 2, **caractérisé en ce que** la couche textile (14) présente exclusivement des fils avec une masse par unité de longueur de maximum 140 dtex, en particulier de maximum 80 dtex.

4. Tuyau selon l'une quelconque des revendications 1 à 3, **caractérisé en ce que** chacun des fils est posé en hélice autour du tuyau intérieur (11).

5. Tuyau selon la revendication 4, **caractérisé en ce qu'**au moins un fil est hélicoidal à droite et au moins un fil est spiralé à gauche.

6. Tuyau selon la revendication 6, **caractérisé en ce que** six à 18 fils sont hélicoidals à droite et six à 18 fils sont hélicoidals à gauche.

7. Tuyau selon la revendication 6, **caractérisé en ce que** la distance entre deux fils à droite ou deux fils à gauche, mesurée dans une direction longitudinale du tuyau (1), est d'env. 1 à 2 mm.

8. Tuyau selon l'une quelconque des revendications 1 à 7, **caractérisé en ce que** l'élastomère thermoplastique est un TPO ou un produit de synthèse à partir d'un caoutchouc de silicone et d'un thermoplastique technique, en particulier un TPSiV.

9. Tuyau selon l'une quelconque des revendications 1 à 8, **caractérisé en ce que** la couche intermédiaire est teintée, en particulier avec des pigments de couleur, ou est vernie ou est revêtue d'une couche de poudre ou d'une feuille d'estampage à chaud.

10. Tuyau selon l'une quelconque des revendications 1 à 9, **caractérisé en ce que** la couche intérieure représente 40 à 60 %, la couche intermédiaire 20 à 30 % et la couche extérieure 10 à 30 % de l'épaisseur de paroi du tuyau (1).

11. Tuyau selon l'une quelconque des revendications 1 à 10, **caractérisé en ce que** le fil ou les fils de la couche textile (14) se composent d'un matériau fibreux de polyester, par exemple PET.

12. Tuyau selon l'une quelconque des revendications 1 à 11, **caractérisé en ce que** le fil ou les fils se composent de 24 à 48 filaments avec 3 à 5,7 dtex.

13. Tuyau selon l'une quelconque des revendications 1 à 12, **caractérisé en ce qu'**un additif, lequel améliore l'adhérence de la couche intermédiaire (13) à la couche intérieure (12), est ajouté à la couche intermédiaire (12).

14. Tuyau selon l'une quelconque des revendications 1 à 13, **caractérisé en ce que** la couche intermédiaire et la couche intérieure sont collées, par exemple au moyen d'une couche d'adhésif.

15. Tuyau selon l'une quelconque des revendications 1 à 14, **caractérisé en ce que** l'adhérence de la couche extérieure (13) à la couche intermédiaire (12) est meilleure que l'adhérence de la couche intermédiaire (12) à la couche intérieure (11).
